# EUROPÄISCHE PATENTANMELDUNG

(11) **EP 2 109 021 A1**
(43) Veröffentlichungstag der Anmeldung: **14.10.2009**
(21) Anmeldenummer: 08015632.6
(22) Anmeldetag: 04.09.2008
(51) Int. Cl.: G05B 19/418

(54) **Maschine aus der Automatisierungstechnik und Produktionsanlage**

(71) Anmelder: Siemens Aktiengesellschaft, 80333 München (DE)
(72) Erfinder: Burgstahler, Ralph, 91056 Erlangen (DE); Eberlein, Werner, Dr., 91054 Erlangen (DE)

(57) **Zusammenfassung**

Die Erfindung betrifft eine Maschine aus der Automatisierungstechnik, wobei ein Maschinenelement (3) der Maschine (6) über einen Gleichstromzwischenkreis (5) und einen ersten Stromrichter (2) mit einem Wechselstromnetz (1) zur Übertragung von elektrischer Energie elektrisch verbunden ist, **dadurch gekennzeichnet, dass** der Gleichstromzwischenkreis (5) zur Übertragung von elektrischer Energie mit einem Solarmodul (6a,7a) elektrisch verbunden ist, wobei die Maschine (6) vom Wechselstromnetz (1) und vom Solarmodul (6a,7a) mit elektrischer Energie versorgbar ist. Weiterhin betrifft die Erfindung eine entsprechende Produktionsanlage. Die Erfindung ermöglicht die beim Betrieb einer Maschine (6) aus der Automatisierungstechnik bestehende Abhängigkeit von der Versorgungsqualität eines Wechselstromnetzes (1) zu verringern.

## Beschreibung

Die Erfindung betrifft eine Maschine aus der Automatisierungstechnik, wobei ein Maschinenelement der Maschine über einen Gleichstromzwischenkreis und einen ersten Stromrichter mit einem Wechselstromnetz zur Übertragung von elektrischer Energie elektrisch verbunden ist.

Weiterhin betrifft die Erfindung eine Produktionsanlage.

Maschinen aus der Automatisierungstechnik, wie z.B. Werkzeugmaschinen, Produktionsmaschinen und/oder Roboter sind im Allgemeinen über einen Gleichstromzwischenkreis und einen ersten Stromrichter mit einem Wechselstromnetz zur Übertragung von elektrischer Energie verbunden. Die zum Betrieb der Maschinen notwendige elektrische Energie wird dabei von einem Wechselstromnetz geliefert, wobei das Wechselstromnetz wiederum von entsprechenden Kraftwerken gespeist wird. Der vom Wechselstromnetz zur Versorgung der Maschine gelieferte Strom wird dabei von dem ersten Stromrichter, der überwiegend als Gleichrichter arbeitet, gleichgerichtet und in einen Gleichstromzwischenkreis eingespeist. Der Gleichstromzwischenkreis wiederum ist über einen zweiten Stromrichter, der im Allgemeinen als Wechselrichter arbeitet mit einem Motor der Maschine verbunden. Der zweite Stromrichter entnimmt dem Gleichstromzwischenkreis die zur elektrischen Energieversorgung des Motors benötigte elektrische Energie.

Dabei ist es auch möglich, dass kurzzeitig, wenn der Motor sich gerade im generatorischen Betrieb (z.B. beim Abbremsen) befindet der zweite Stromrichter als Gleichrichter arbeitet und über den ersten Stromrichter, der in diesem Fall als Wechselrichter arbeitet Energie in das Wechselstromnetz zurückspeist wird.

Die oben beschriebene Art der Energieversorgung von Maschinen aus der Automatisierungstechnik hängt stark von der elektrischen Versorgungsqualität des Wechselstromnetzes ab. Insbesondere wird zur Energieversorgung der Maschinen im Allgemeinen eine elektrisch konstante Wechselspannung, welche vom Wechselstromnetz zur Verfügung gestellt werden muss, benötigt. Diese hohe elektrische Versorgungsqualität ist insbesondere global gesehen nicht immer gegeben. Weiterhin entstehen durch die Durchleitung der elektrischen Energie von den Kraftwerken über das Wechselstromnetz zu den Maschinen Transportverluste.

Stellt das Wechselstromnetz nicht in erforderlicher Qualität die elektrische Energie zum Betrieb der Maschine aus der Automatisierungstechnik zur Verfügung, so muss die Produktion, wenn z.B. die Wechselspannung unter einen kritischen Wert fällt, gestoppt werden, was zu Produktionsausfällen führt.

Der Erfindung liegt die Aufgabe zugrunde, die beim Betrieb einer Maschine aus der Automatisierungstechnik bestehende Abhängigkeit von der Versorgungsqualität eines Wechselstromnetzes zu verringern.

Diese Aufgabe wird gelöst durch eine Maschine aus der Automatisierungstechnik, wobei ein Maschinenelement der Maschine über einen Gleichstromzwischenkreis und einen ersten Stromrichter mit einem Wechselstromnetz zur Übertragung von elektrischer Energie elektrisch verbunden ist, **dadurch gekennzeichnet, dass** der Gleichstromzwischenkreis zur Übertragung von elektrischer Energie mit einem Solarmodul elektrisch verbunden ist, wobei die Maschine vom Wechselstromnetz und vom Solarmodul mit elektrischer Energie versorgbar ist.

Vorteilhafte Ausbildungen der Erfindung ergeben sich aus den abhängigen Ansprüchen.

Es erweist sich als vorteilhaft, falls das Solarmodul mehr elektrischer Energie liefert als die Maschine verbraucht, die überschüssige elektrische Energie vom Solarmodul über den Gleichstromkreis und den ersten Stromrichter an das Wechselstromnetz übertragbar ist, da dann auch elektrische Energie an das Wechselstromnetz vom Solarmodul zurückgespeist werden kann ohne das hierfür ein zusätzlicher separater Wechselrichter für diesen Zweck vorhanden sein muss. Somit kann der sonst bei einer handelsüblichen Solaranlage zusätzlich zu installierende, zu der Solaranlage zugehörige, separate Wechselrichter entfallen, da der ohnehin schon vorhandene erste Stromrichter zu diesem Zweck verwendet werden kann.

Ferner erweist es sich als vorteilhaft, wenn der Gleichstromzwischenkreis zur Übertragung von elektrischer Energie mit mehreren Solarmodulen elektrisch verbunden ist, wobei die Solarmodule elektrisch in Reihe und/oder parallel geschalten sind. Durch eine geeignete Anzahl von in Reihe geschalteten Solarmodulen wird gewährleistet, dass die betriebsmäßig notwendige Spannung des Gleichstromzwischenkreises von den Solarmodulen erreicht wird. Dabei können z.B. beliebig viele Solarmodule auch elektrisch parallel geschaltet werden, um die zum Betrieb der Maschine notwendige Energie zur Verfügung zu stellen.

Ferner erweist es sich als vorteilhaft, wenn der erste Stromrichter Bestandteil der Maschine ist. Häufig weisen handelsübliche Maschinen aus der Automatisierungstechnik als integraler Bestandteil den ersten Stromrichter auf. Falls das Solarmodul mehr elektrische Energie produziert als die Maschine verbraucht, kann der erste Stromrichter als Wechselrichter arbeiten und die überschüssige elektrische Energie in das Wechselstromnetz einspeisen. Somit kann der sonst bei einer handelsüblichen Solaranlage zusätzlich zu installierende, zu der Solaranlage zugehörige, separate Wechselrichter entfallen, da der ohnehin schon vorhandene erste Stromrichter der Maschine zu diesem Zweck verwendet werden kann.

Weiterhin erweist sich eine Produktionsanlage, die die erfindungsgemäße Maschine aufweist, als vorteilhaft.

Ferner erweist es sich als vorteilhaft, eine Produktionsanlage, welche die erfindungsgemäße Maschine aufweist, auszubilden, wobei die Produktionsanlage eine weitere Maschine aus der Automatisierungstechnik aufweist, wobei ein Maschinenelement der weiteren Maschine über den Gleichstromzwischenkreis und den ersten Stromrichter mit dem Wechselstromnetz zur Übertragung von elektrischer Energie elektrisch verbunden ist, wobei der Gleichstromzwischenkreis zur Übertragung von elektrischer Energie mit dem Solarmodul elektrisch verbunden ist, wobei die weitere Maschine vom Wechselstromnetz und vom Solarmodul mit elektrischer Energie versorgbar ist. Hierdurch kann auch eine komplette Produktionsanlage, die mehrere Maschinen aus der Automatisierungstechnik aufweist, mit Hilfe der Erfindung mit elektrischer Energie versorgt werden, wobei den Maschinen ein gemeinsamer erster Stromrichter zugeordnet ist.

Weiterhin erweist es sich als vorteilhaft, wenn das Solarmodul mehr elektrischer Energie liefert als die Maschine nach einem der Ansprüche 1 bis 5 und die weitere Maschine verbrauchen, die überschüssige elektrische Energie vom Solarmodul über den Gleichstromkreis und den ersten Stromrichter an das Wechselstromnetz übertragbar ist, da dann auch elektrische Energie an das Wechselstromnetz vom Solarmodul zurückgespeist werden kann ohne das hierfür ein zusätzlicher separater Wechselrichter für diesen Zweck vorhanden sein muss. Somit kann der sonst bei einer handelsüblichen Solaranlage zusätzlich zu installierende, zu der Solaranlage zugehörige, separate Wechselrichter entfallen, da der ohnehin schon vorhandene erste Stromrichter zu diesem Zweck verwendet werden kann.

Ferner erweist es sich als vorteilhaft, wenn die Maschine und/oder die weitere Maschine aus der Automatisierungstechnik als Werkzeugmaschine, Produktionsmaschine und/oder als Roboter ausgebildet ist, da Werkzeugmaschinen, Produktionsmaschinen und/oder Roboter übliche Maschinen aus der Automatisierungstechnik darstellen.

Zwei Ausführungsbeispiele der Erfindung sind in der Zeichnung dargestellt und werden im Folgenden näher erläutert. Dabei zeigen:
- FIG 1: eine Produktionsanlage mit der erfindungsgemäßen Maschine und
- FIG 2: eine weitere Produktionsanlage mit zwei erfindungsgemäßen Maschinen.

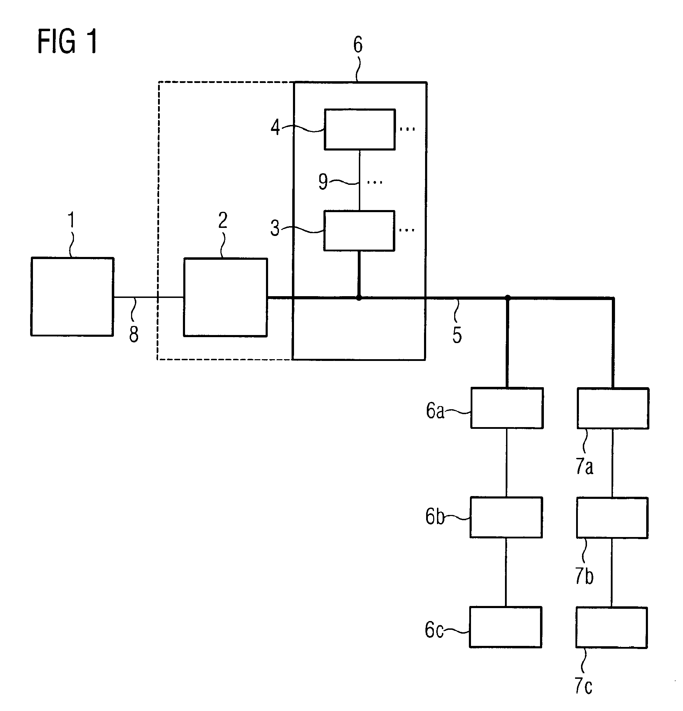

In FIG 1 ist in Form einer schematisierten Darstellung eine Produktionsanlage mit der erfindungsgemäßen Maschine 6 aus der Automatisierungstechnik dargestellt. Die Maschine 6 aus der Automatisierungstechnik kann dabei z.B. als Werkzeugmaschine, Produktionsmaschine und/oder als Roboter ausgebildet sein. Es sei an dieser Stelle weiterhin angemerkt, dass in FIG 1 der Übersichtlichkeit halber nur die zum Verständnis der Erfindung notwendigen Elemente der Maschine dargestellt sind. Die Maschine 6 weist dabei im Rahmen des Ausführungsbeispiels einen Motor 4 und ein Maschinenelement 3, das im Rahmen des Ausführungsbeispiels in Form eines zweiten Stromrichters vorliegt, auf. Der zweite Stromrichter 3 ist über einen Gleichstromzwischenkreis 5 und einen ersten Stromrichter 2 über Leitungen 8 mit einem Wechselstromnetz 1 zur Übertragung von elektrischer Energie elektrisch verbunden.

Erfindungsgemäß ist der Gleichstromkreis 5 zur Übertragung von elektrischer Energie mit Solarmodulen 6a, 6b, 6c, 7a, 7b und 7c elektrisch mittels Leitungen verbunden. Der erste Stromrichter 2 arbeitet im überwiegenden Betrieb als Gleichrichter, während der zweite Stromrichter 3 überwiegend als Wechselrichter arbeitet. Der erste Stromrichter richtet dabei die vom Wechselstromnetz 1 gelieferte Wechselspannung gleich und stellt am Gleichstromzwischenkreis 5 eine Gleichspannung zur Verfügung. Diese wird vom zweiten Stromrichter 3 wechselgerichtet und über die Verbindung 9 wird dann der Motor 4 entsprechend mit elektrischer Energie versorgt. Neben der Versorgung mit elektrischer Energie über das Wechselstromnetz 1 ist die Maschine 6 aber auch über Solarmodule 6a, 6b, 6c, 7a, 7b und 7c, die mit dem Gleichstromzwischenkreis elektrisch verbunden sind zusätzlich mit elektrischer Energie versorgbar. Im Rahmen des Ausführungsbeispiels sind die Solarmodule 6a, 6b und 6c elektrisch in Reihe geschalten um die entsprechend für den Betrieb der Maschine 6 notwendige Gleichspannung am Gleichstromzwischenkreis zur Verfügung zu stellen. Entsprechend sind die Solarmodule 7a, 7b und 7c elektrisch in Reihe geschalten und mit dem Gleichstromzwischenkreis 5 elektrisch verbunden. Die Solarmodule 6a, 6b und 6c sind gemäß FIG 1 mit den Solarmodulen 7a, 7b und 7c elektrisch parallel geschalten. Je nach Energiebedarf der Maschine, der notwendigen Spannung des Gleichstromzwischenkreises und der Größe der Solarmodule kann es aber im Extremfall auch ausreichen, z.B. nur ein einzelnes Solarmodul mit dem Gleichstromzwischenkreis elektrisch zu verbinden.

Fällt nun z.B. längerfristig oder auch nur kurzzeitig das Wechselstromnetz 1 aus oder stellt nicht mehr die zur Energieversorgung der Maschine benötige Wechselspannung in ausreichender Höhe zu Verfügung, so erfolgt erfindungsgemäß die Versorgung mit elektrischer Energie der Maschine 6 über die Solarmodule, welche direkt mit dem Gleichstromzwischenkreis verbunden sind. Durch die erfindungsgemäße direkte elektrische Verbindung der Solarmodule mit dem Gleichstromzwischenkreis kann auf einen zusätzlichen Wechselrichter, welcher im Rahmen einer Installation einer handelsüblichen Solaranlage zwischen Wechselstromnetz und den Solarmodulen geschaltet wird, entfallen. Falls von den Solarmodulen mehr elektrische Energie geliefert wird als die Maschine 6 verbraucht, wird die überschüssige elektrische Energie von den Solarmodulen über den Gleichstromkreis 5 und den ersten Stromrichter 2, der in diesem Fall als Wechselrichter arbeitet, an das Wechselstromnetz 1 übertragen und solchermaßen Energie in das Wechselstromnetz 1 von den Solarmodulen eingespeist. Diese Betriebsweise ist insbesondere dann interessant, wenn z.B. an einem Wochenende oder einen Feiertag keine Produktion stattfindet und die Maschine 6 somit auch keine Energie verbraucht.

Weiterhin kann der erste Stromrichter 2 auch Bestandteil der Maschine 6 sein, was in FIG 1 gestrichelt gezeichnet dargestellt ist. Hierdurch kann der Besitzer der Maschine 6, seine Maschine neben der Produktion von Gütern auch gleichzeitig zusammen mit den Solarmodulen als Solarkraftwerk einsetzen. Es sei dabei an dieser Stelle angemerkt, dass die Maschine 6 neben dem Motor 4 und dem zweiten Stromrichter 3 und der Verbindung 9 in der Regel noch weitere Motoren und weitere zweite Stromrichter und weitere Verbindungen aufweisen kann, was in FIG 1 durch entsprechende Punkte angedeutet ist, d.h. der durch den Motor 4 und den zweiten Stromrichter 3 und der Verbindung 9 gebildete Antriebsstrang ist in der Regel bei einer Maschine aus der Automatisierungstechnik mehrfach vorhanden und jeweils mit dem Gleichstromzwischenkreis verbunden.

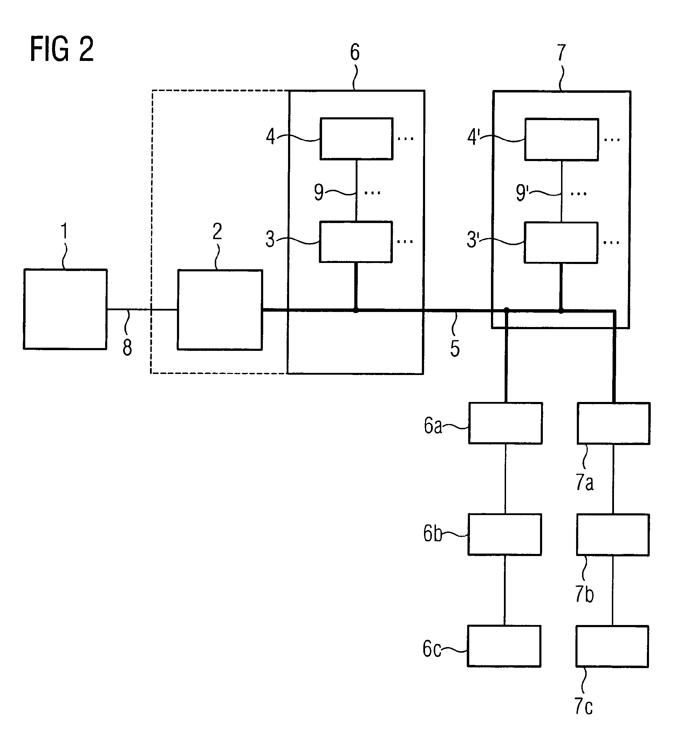

In FIG 2 ist in Form einer schematisierten Darstellung eine weitere Produktionsanlage dargestellt. Die in FIG 2 dargestellte Ausführungsform entspricht im Grundaufbau im Wesentlichen der vorstehend in FIG 2 beschriebenen Ausführungsform. Gleiche Elemente sind daher in FIG 2 mit den gleichen Bezugszeichen versehen wie in FIG 1. Der einzige wesentliche Unterschied der Ausführungsform gemäß FIG 2 gegenüber der Ausführungsform gemäß FIG 1 besteht darin, dass die Produktionsanlage neben der Maschine 6 eine weitere Maschine 7 aus der Automatisierungstechnik, die z.B. ebenfalls in Form einer Werkzeugmaschine, Produktionsmaschine und/oder in Form eines Roboters vorliegen kann, aufweist. Im Rahmen des Ausführungsbeispiels ist die weitere Maschine 7 identisch wie die Maschine 6 aufgebaut. Die weitere Maschine 7 weist einen Motor 4' auf, der über eine Verbindung 9' mit einem Maschinenelement 3' das im Rahmen des Ausführungsbeispiels als zweiter Stromrichter ausgebildet ist, verbunden. Das Maschinenelement 3', der weiteren Maschine 7 ist über den Gleichstromzwischenkreis 5 und den ersten Stromrichter 2 mit dem Wechselstromnetz 1 zur Übertragung von elektrischen Energie elektrisch über Leitungen 8 verbunden. Genau wie im Falle des Ausführungsbeispiels gemäß FIG 1 ist die weitere Maschine 7 vom Wechselstromnetz 1 und von den Solarmodulen 6a bis 7c mit elektrischer Energie versorgbar, wobei im Extremfall auch nur eine einzelnes Solarmodul vorhanden sein kann.

Es sei an dieser Stelle angemerkt, dass genau wie die Maschine 6 auch die weitere Maschine 7 im Allgemeinen mehrere Motoren 4', die von einem jeweilig zugehörigen zweiten Stromrichter 3' angetrieben werden, aufweisen kann, d.h. auch der durch den Motor 4' und den zweiten Stromrichter 3' und die Verbindung 9' gebildete Antriebsstrang ist in der Regel auch bei der weiteren Maschine 7 mehrfach vorhanden, was durch entsprechende Punkte in FIG 2 angedeutet ist. Die entsprechenden Antriebsstränge sind jeweils mit dem Gleichstromzwischenkreis verbunden.

Der erste Stromrichter 2 ist somit im Rahmen dieses Ausführungsbeispiels funktionell der Maschine 6 und der weiteren Maschine 7 zugeordnet, wobei er physikalisch außerhalb der beiden Maschine angeordnet sein kann oder aber Bestandteil z.B. der Maschine 6 sein kann.

Es sei an dieser Stelle angemerkt, dass neben den beiden dargestellten Maschinen 6 und 7 selbstverständlich zusätzlich noch mehr Maschinen in der Produktionsanlage mit dem Gleichstromzwischenkreis elektrisch verbunden sein können, die entsprechend der Erfindung über den ersten Stromrichter 2 und die Solarmodule mit elektrischer Energie versorgbar sind.

Weiterhin sei an dieser Stelle angemerkt, dass der Motor z.B. auch als Gleichstrommotor ausgebildet sein kann. In diesem Falle würde das Maschinenelement als Gleichstrommotor ausgebildet sein.

Weiterhin sei an dieser Stelle angemerkt, dass das mit dem Bezugszeichen versehene Element 4 anstatt eines Motors z.B. auch in Form einer Heizung oder einer anderen Energie aufnehmenden Einrichtung ausgebildet sein kann.

Durch die erfindungsgemäße zusätzliche direkte Einspeisung von Solarenergie in den Gleichstromzwischenkreis lassen sich Energietransportverluste einsparen und die Gesamtverfügbarkeit der Energieversorgung der Maschine aus der Automatisierungstechnik sowie des Wechselstromnetzes erhöhen. Zusätzlich wird der übliche für die Solarmodule sonst notwendige separate Wechselrichter zur Anbindung der Solarmodule an das Wechselstromnetz nicht mehr benötigt. Die Produktionsanlage lässt sich somit kompakt aufbauen. Wenn die Energieversorgung der Maschine erfindungsgemäß durch die direkte Einspeisung der Solarenergie über die Solarmodule in den Gleichstromzwischenkreis erfolgt, entfällt das sonst übliche Wechselrichten mittels eines separaten Wechselrichters und die Einspeisung ins Wechselstromnetz und das wiederholte Gleichrichten mittels des ersten Stromrichters. Somit können Wandlungsverluste durch die erfindungsgemäße direkte elektrische Ankopplung der Solarmodule an den Gleichstromzwischenkreis vermieden werden.

Weiterhin sei an dieser Stelle angemerkt, dass im Rahmen des Ausführungsbeispiels, dass im Allgemeinen bei einem Gleichstromzwischenkreis vorhandene elektrische Energiespeicherelement, das üblicherweise in Form eines Kondensators oder einer Spule ausgebildet ist, integraler Bestandteil das zweiten Stromrichters 2 ist. Dies muss jedoch nicht notwendiger weise so sein, sondern das Energiespeicherelement kann auch als separates Element vorhanden sein.

## Patentansprüche

1. Maschine aus der Automatisierungstechnik, wobei ein Maschinenelement (3) der Maschine (6) über einen Gleichstromzwischenkreis (5) und einen ersten Stromrichter (2) mit einem Wechselstromnetz (1) zur Übertragung von elektrischer Energie elektrisch verbunden ist, **dadurch gekennzeichnet, dass** der Gleichstromzwischenkreis (5) zur Übertragung von elektrischer Energie mit einem Solarmodul (6a,7a) elektrisch verbunden ist, wobei die Maschine (6) vom Wechselstromnetz (1) und vom Solarmodul (6a,7a) mit elektrischer Energie versorgbar ist.

2. Maschine nach Anspruch 1, **dadurch gekennzeichnet, dass** falls das Solarmodul (6a,7a) mehr elektrischer Energie liefert als die Maschine (6) verbraucht, die überschüssige elektrische Energie vom Solarmodul (6a,7a) über den Gleichstromkreis und den ersten Stromrichter an das Wechselstromnetz übertragbar ist.

3. Maschine nach einem der vorhergehenden Ansprüche, **dadurch gekennzeichnet, dass** der Gleichstromzwischenkreis zur Übertragung von elektrischer Energie mit mehreren Solarmodulen (6a,6b,6c,7a,7b,7c) elektrisch verbunden ist, wobei die Solarmodule elektrisch in Reihe und/oder parallel geschalten sind.

4. Maschine nach einem der vorhergehenden Ansprüche, **dadurch gekennzeichnet, dass** der erste Stromrichter (2) Bestandteil der Maschine (6) ist.

5. Maschine nach einem der vorhergehenden Ansprüche, **dadurch gekennzeichnet, dass** die Maschine (6) als Werkzeugmaschine, Produktionsmaschine und/oder als Roboter ausgebildet ist.

6. Produktionsanlage, wobei die Produktionsanlage eine Maschine nach einem der Ansprüche 1 bis 5 aufweist.

7. Produktionsanlage nach Anspruch 6, wobei die Produktionsanlage eine weitere Maschine (7) aus der Automatisierungstechnik aufweist, wobei ein Maschinenelement (3) der weiteren Maschine (7) über den Gleichstromzwischenkreis (5) und den ersten Stromrichter (2) mit dem Wechselstromnetz (1) zur Übertragung von elektrischer Energie elektrisch verbunden ist, wobei der Gleichstromzwischenkreis (5) zur Übertragung von elektrischer Energie mit dem Solarmodul (6a,7a) elektrisch verbunden ist, wobei die weitere Maschine (7) vom Wechselstromnetz (1) und vom Solarmodul 6a,7a) mit elektrischer Energie versorgbar ist.

8. Produktionsanlage nach Anspruch 7, **dadurch gekennzeichnet, dass** falls das Solarmodul (6a,7a) mehr elektrischer Energie liefert als die Maschine (6) nach einem der Ansprüche 1 bis 5 und die weitere Maschine (7) verbrauchen, die überschüssige elektrische Energie vom Solarmodul (6a,7a) über den Gleichstromkreis (5) und den ersten Stromrichter (2) an das Wechselstromnetz (1) übertragbar ist.

9. Produktionsanlage nach Anspruch 7 oder 8, **dadurch gekennzeichnet, dass** die weitere Maschine (7) als Werkzeugmaschine, Produktionsmaschine und/oder als Roboter ausgebildet ist.
